(19) **Europäisches Patentamt / European Patent Office / Office européen des brevets**

(11) **EP 3 845 874 B1**

(12) **EUROPÄISCHE PATENTSCHRIFT**

(45) Veröffentlichungstag und Bekanntmachung des Hinweises auf die Patenterteilung:
**04.12.2024 Patentblatt 2024/49**

(21) Anmeldenummer: **19220148.1**

(22) Anmeldetag: **30.12.2019**

(51) Internationale Patentklassifikation (IPC):
**G01G 3/14** (2006.01)     **G01G 19/42** (2006.01)
**G01G 19/52** (2006.01)

(52) Gemeinsame Patentklassifikation (CPC):
**G01G 19/42; G01G 3/1402; G01G 19/52**

(54) **REGAL**

SHELF

ÉTAGÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.07.2021 Patentblatt 2021/27**

(73) Patentinhaber: **Bizerba SE & Co. KG**
**72336 Balingen (DE)**

(72) Erfinder:
• **FRITSCH, Andreas**
 **72336 Balingen (DE)**
• **METZGER, Frank**
 **72461 Albstadt (DE)**

• **WITTE, Harald**
 **72336 Balingen (DE)**
• **KALLMANN, Luca**
 **78669 Wellendingen (DE)**

(74) Vertreter: **Huber, Meik**
**Bizerba SE & Co. KG**
**PF 18/1**
**Wilhelm-Kraut-Straße 65**
**72336 Balingen (DE)**

(56) Entgegenhaltungen:
**EP-A2- 0 251 175     CN-A- 110 169 685**
**US-A- 4 655 305     US-B1- 10 121 121**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Regalkonsole mit mindestens einer Wägezelle. Die Regalkonsole ist geeignet zum befestigt werden in einer vertikal angeordneten Regalschiene. Dafür weist die Regalkonsole eine Verankerungsvorrichtung auf. Die Regalkonsole umfasst einen Ausleger zum Tragen eines Regalfachbodens. Im Zustand, in dem die Regalkonsole in einer Regalschiene befestigt ist, steht der Ausleger in einer im Wesentlichen horizontaler Richtung von der Regalschiene ab.

Die EP1319173B1 zeigt ein Regal eines Kleinteillagers, bei dem eine Bestimmung des Gegenstandes der entnommen wird automatisiert erfolgt. Das Regal umfasst eine Wägeeinheit. Die technische Lehre des Patents befasst sich mit der Berechnung des genauen Ortes der Entnahme eines Gegenstandes in Abhängigkeit des durch die Waage gemessenen Gewichts. Dabei ist die konkrete Implementierung der Wägezelle in dem Regal unberücksichtigt gelassen.

Die CN110169685A zeigt ein Regal, welches eine Wägeeinheit umfasst. Unter Berücksichtigung des Gewichts wird ein aus dem Regal entnommener Gegenstand bestimmt.

Die EP0251175A2 zeigt eine Vorrichtung zum Messen von Druck-, Zug-, Scherkräften und Drehmomenten.

Die US4655305 zeigt eine Wägeelle zur Bestimmung eines auf einer Platform aufgebrachten Gewichts. Die Bauform der Wägezelle erlaubt, dass die Wägezelle mittels horizontal ausgerichteter Bolzen seitlich an einer Wand befestigt werden kann.

Die US10121121B1 zeigt ein Regal, welches Informationen zu entnommenen und hinzugefügten Gegenständen auf einem Regal ermittelt.

Aufgabe der Erfindung ist es, eine Regalkonsole und ein Regal mit integrierter Wägefunktionalität zu schaffen, wobei die Wägezelle speziell der Integrationsfähigkeit in einer Regalkonsole Rechnung trägt.

Diese Aufgabe wird durch ein Regal nach Anspruch 1 gelöst.

Die Erfindung betrifft ein Regal bestehend aus mindestens zwei vertikal angeordneten Regalschienen und mindestens zwei auf gleicher Höhe in jeweils einer Regalschiene angeordneten Regalkonsolen. Das Regal umfasst weiter mindestens einen auf den zwei auf gleicher Höhe angeordneten Regalkonsolen aufgelegten Regalfachboden. Der Regalfachboden umfasst zwei parallel ausgebildete Streben, die mit ihren Enden auf den Krafteinleitungsabschnitten von jeweils zwei Wägezellen abgestützt sind. Das Regal umfasst eine Auswerteeinheit, die in periodischen Abständen oder bei einer Änderung des Gesamtgewichts, welches von den vier Wägezellen, auf deren Krafteinleitungsabschnitten der Regalfachboden aufliegt, erfasst wird, aus den Daten der Wägezellen neue Schwerpunktskoordinaten ermittelt. Diese Schwerpunktskoordinaten werden an eine Steuereinheit übermittelt. Die Steuereinheit ermittelt basierend auf Änderungen der Schwerpunktskoordinaten einen Regalbereich auf dem Regalfachboden. Die Steuereinheit bestimmt aus der Änderung des Gesamtgewichts das Gewicht der in dem ermittelten Regalbereich entnommenen oder zugefügten Waren und aktualisiert den in einem Speicher gespeicherten Warenbestand für diesen Regalbereich.

Erfindungsgemäß umfasst eine Regalkonsole zwei Wägezellen. Die Regalkonsole umfasst eine Verankerungsvorrichtung, die geeignet ist, die Regalkonsole in einer vertikal angeordneten Regalschiene zu befestigen. Die Regalkonsole umfasst einen Ausleger zum Tragen eines Regalfachbodens. Ein Regalfachboden ist zum Beispiel ein Regalbrett, dass von mindestens zwei durchgehenden oder unterbrochenen Streben getragen wird. Dabei ist unter unterbrochenen Streben zu verstehen, dass das Regalbrett seitlich jeweils zwei Streben umfasst, die jedoch nicht durchgängig unter dem Regalfachboden entlanglaufen. Ein Regalfachboden ist zum Beispiel auch ein Gitterfachboden, der von mindestens zwei durchgehenden oder unterbrochenen Streben getragen wird. Im Zustand, in dem die Regalkonsole in einer Regalschiene befestigt ist, steht der Ausleger in einer im Wesentlichen horizontalen Richtung von der Regalschiene ab. In einer Ausführungsform ist der Ausleger durch eine vertikal angeordnete Rahmenkonstruktion oder ein vertikal angeordnetes Blech gebildet. Im Sinne dieser Offenbarung ist darunter auch ein dreieckförmiger Ausleger zu verstehen, dessen Oberseite oder Unterseite in einer im Wesentlichen horizontaler Richtung von der Regalschiene absteht. Im Sinne dieser Offenbarung ist darunter auch ein dreieckförmiger Ausleger zu verstehen, dessen Achse im Wesentlichen in horizontaler Richtung von der Regalschiene absteht. Der Ausleger umfasst mindestens eine Befestigungsvorrichtung für die mindestens eine Wägezelle. Die mindestens eine Wägezelle weist einen monolithisch ausgebildeten Messkörper auf, der einen Kraftaufnahmeabschnitt, einen Krafteinleitungsabschnitt und einen zwischen dem Kraftaufnahmeabschnitt und dem Krafteinleitungsabschnitt angeordneten Gelenkabschnitt umfasst. Der Kraftaufnahmeabschnitt des Messkörpers ist seitlich an der Befestigungsvorrichtung angebracht. Der Messkörper weist mindestens ein Befestigungsloch auf, mittels dessen er mit einer horizontal durch den Messkörper verlaufenden Schraube an der Befestigungsvorrichtung angebracht ist. In einer Ausführungsform weist die Wägezelle zwischen ihrem krafteinleitungsseitigen axialen Ende und ihrem kraftaufnahmeseitigen axialen Ende eine Längsachse auf. Die Längsachse der Wägezelle verläuft parallel zur horizontalen Richtung, in der der Ausleger von der Regalschiene absteht.

In einer Ausführungsform sind die Längsachse des Messkörpers und die Achse des Befestigungslochs rechtwinklig ausgerichtet. Das heißt, die Achse des Befestigungslochs und die Längsachse des Messkörpers geben horizontale Richtungen und somit die Lage der horizontalen Ebene vor. In einer Ausführungsform bildet der Gelenkabschnitt einen Parallelogrammlenker, der in vertikaler Richtung, parallel zur vertikal angeordneten Rahmenkonstruktion oder zum vertikal angeordneten Blech des Auslegers, bewegbar ist. Die Wägezelle umfasst mindestens einen in dem Bereich des Gelenkabschnitts oberseitig oder unterseitig an dem Messkörper angeordneten Dehnungsmessstreifen zur Erfassung einer dehnenden oder stauchenden Verformung des Messkörpers. Dabei erfasst der Dehnungsmessstreifen insbesondere die Verformung des Gelenkabschnitts. Der mindestens eine Dehnungsmessstreifen ist in horizontaler Richtung ausgerichtet. Das hat den Vorteil, dass die Wägezelle seitlich an der Befestigungsvorrichtung festgeschraubt werden kann. Durch diese Form der Befestigung lässt sich der Kraftaufnahmeabschnitt und damit die gesamte Wägezelle und daraus folgend auch die Regalkonsole besonders schmal gestalten.

Erfindungsgemäß stützt die mindestens eine Wägezelle mit ihrem Krafteinleitungsabschnitt den Regalfachboden zumindest teilweise ab.

Erfindungsgemäß umfasst die Regalkonsole zwei Befestigungsvorrichtungen, an denen jeweils eine Wägezelle mit ihrem Kraftaufnahmeabschnitt befestigt ist. Die Krafteinleitungsabschnitte der beiden Wägezellen stützen jeweils eine Strebe des Regalfachbodens ab. Erfindungsgemäß erfolgt die Abstützung momentenfrei, das heißt, die Strebe wird so durch den Krafteinleitungsabschnitt der Wägezellen gestützt, dass es nicht zu einer Verspannung kommen kann. Dies wird insbesondere dadurch erreicht, dass die Strebe auf dem Krafteinleitungsabschnitt aufliegt und nicht festgeschraubt ist. Das ist dann von Vorteil, wenn mehrere Wägezellen den Regalfachboden abstützen und es sich um ein sogenanntes Multipoint Messsystem handelt. In einer Ausführungsform wird der Regalfachboden ausschließlich auf Krafteinleitungsabschnitten von Wägezellen abgestützt und an keinem anderen festen Teil der Regalkonsole. So wird ein Kraftnebenschluss und eine daraus resultierende fehlerhafte Gewichtsermittlung verhindert.

In einer Ausführung besteht der mindestens eine Dehnungsmessstreifen aus einer mäanderförmig parallel verlaufenden Widerstandsbahn, die parallel zur Längsachse des Messkörpers und horizontal ausgerichtet ist.

In einer Ausführungsform umfasst der Gelenkabschnitt mindestens eine, insbesondere zwei Dünnstellen an einem oberen Gelenkelement und mindestens eine, insbesondere zwei Dünnstellen an einem parallel zum oberen Gelenkelement verlaufenden unteren Gelenkelement.

In einer Ausführungsform umfasst die Wägezelle in den Bereichen der zwei Dünnstellen des oberen Gelenkelements jeweils einen oberseitig am oberen Gelenkelement angeordneten Dehnungsmessstreifen. In einer Ausführungsform umfasst die Wägezelle zusätzlich in den Bereichen der zwei Dünnstellen des unteren Gelenkelements jeweils einen unterseitig am unteren Gelenkelement angeordneten Dehnungsmessstreifen. Die vier Dehnungsmessstreifen der Wägezelle sind zu einer Wheatstoneschen Messbrücke verschaltet. In einer Ausführungsform sind die Verschaltung der zwei oberseitig angeordneten Dehnungsmessstreifen und die zwei oberseitig angeordneten Dehnungsmessstreifen auf einer Dehnungsmessstreifenfolie angebracht. In einer Ausführungsform sind die Verschaltung der zwei unterseitig angeordneten Dehnungsmessstreifen und die zwei unterseitig angeordneten Dehnungsmessstreifen auf einer Dehnungsmessstreifenfolie angebracht.

In einer Ausführungsform umfasst die Wägezelle in den Bereichen der zwei Dünnstellen des oberen Gelenkelements jeweils zwei oberseitig am oberen Gelenkelement angeordnete Dehnungsmessstreifen. Die jeweils zwei Dehnungsmessstreifen sind parallel ausgerichtet und bezüglich einer schmalen Seite des Messkörpers nebeneinander angeordnet. Die vier Dehnungsmessstreifen der Wägezelle sind zu einer Wheatstoneschen Messbrücke verschaltet. In einer Ausführungsform sind die Verschaltung der Dehnungsmessstreifen und die Dehnungsmessstreifen auf einer Dehnungsmessstreifenfolie angebracht. In anderen Worten heißt das, dass vier Dehnungsmessstreifen zu einer Wheatstoneschen Messbrücke verschaltet sind. Die Dehnungsmessstreifen sind alle in gleicher Richtung, nämlich parallel der Längsachse des Messkörpers ausgerichtet. Die vier Dehnungsmessstreifen sind paarweise angeordnet, wobei bei jedem Paar von Dehnungsmessstreifen, die Dehnungsmessstreifen bezüglich ihrer Ausrichtung nebeneinander positioniert sind. Jedes Paar von Dehnungsmessstreifen ist auf der Oberseite des oberen Gelenkelements angebracht. Im Bereich jeder der zwei Dünnstellen des oberen Gelenkelements des Messkörpers befindet sich ein Paar von nebeneinander angeordneten Dehnungsmessstreifen.

In einer Ausführungsform weisen alle Dünnstellen die gleiche Dicke auf. In einer Ausführungsform weisen alle Dünnstellen die gleiche Form auf.

In einer Ausführungsform weist der Krafteinleitungsabschnitt des Messkörpers auf der oberen Fläche eine Bohrung auf, an der der zu messende Gegenstand festgeschraubt ist. In einer Ausführungsform weist der Krafteinleitungsabschnitt eine Aufnahme auf, die als ein von der Oberseite des Messkörpers ausgehender und senkrecht zur Längsachse verlaufender Einschnitt ausgebildet ist. In einer Ausführungsform ist der Einschnitt der Aufnahme in der schmalen Richtung des Messkörper über die komplette Breite des Messkörpers ausgebildet. In einer Ausführungsform hat der Einschnitt der Aufnahme auf seiner von der Oberseite des Messkörpers abgewandten Seite eine runde Kontur. Dieser Einschnitt ist während der Herstellung des Messkörpers zum Beispiel derart zu bilden, dass ein Loch parallel zur schmalen Seite des Meskörpers in den Messkörper gebohrt wird. Dieses Loch wird dann zur Oberseite des Messkörpers hin ausgefräst. In einer Ausführungsform umfasst die Wägezelle einen Einsatz, der formschlüssig in der runden Kontur der Aufnahme anliegt, wobei der Einsatz auf seiner dem Formschluss mit der runden Kontur gegenüberliegenden Seite eine rechteckige Kontur zur Aufnahme eines Kraftübertragungselements aufweist. Das heißt, der Einsatz ist im Wesentlichen U-förmig.

In einer Ausführungsform ist das Kraftübertragungselement derart ausgebildet, dass es formschlüssig in der rechteckigen Kontur des Einsatzes aufnehmbar ist. Das heißt, das Kraftübertragungselement hat im Wesentlichen die Form eines auf dem Kopf stehenden U. Das Kraftübertragungselement weist eine Schneide zum Abstützen einer Strebe eines Regalfachbodens auf. Dadurch ist die Strebe nicht starr mit dem Messkörper verbunden, was zu einer momentenfreien Kraftaufnahme führt. In anderen Worten wird der Messkörper nicht durch eine starr verbundene Strebe verspannt. Da es sich bei der Wiegung des Regalfachbodens um Multipoint Messungen handelt, bei der der starre Regalfachboden mit Hilfe mehrere Wägezellen gewogen wird, ist die momentenfreie Abstützung besonders vorteilhaft.

Erfindungsgemäß ist der Messkörper spiegelsymmetrisch zu der horizontalen Ebene, die den Messkörper auf seiner halben Höhe durchdringt. Eine Aufnahme für einen Einsatz ist auch auf der Unterseite des Messkörpers ausgebildet. Diese Seite ist nicht dazu vorgesehen, eine zu messende Kraft einzuleiten. Allerdings kann der Messkörper in einer um 180° gedrehten Position als Messkörper für eine Wägezelle dienen, so dass die Unterseite zur Oberseite wird. In dieser Ausrichtung wird dann die Kraft über die ehemals untere Aufnahme eingeleitet. Dies hat den Vorteil, dass der Messkörper als Basis für Wägezellen dienen kann, die an der einen oder der anderen Befestigungsvorrichtung der Regalkonsole befestigt ist. Ist die Regalkonsole derart aufgebaut, dass beide Befestigungsvorrichtungen in horizontaler Richtung in der Nähe der Mitte und nicht an den Rändern des Auslegers angeordnet sind, so ist der eine Messkörper im Vergleich zum anderen um 180° verdreht. Durch den symmetrischen Aufbau können jedoch baugleiche Messkörper als Basis für die beiden um 180 ° gedrehten Wägezellen dienen. Die Anordnung, dass die Befestigungsvorrichtungen nahe der Mitte sind ist vorteilhaft, da die Krafteinleitungsabschnitte dann in der Nähe der Ränder des Auslegers sind und die Streben des Regalfachbodens, die auf den Krafteinleitungsabschnitten der Wägezellen aufliegen, dann im äußeren Bereich des Regalfachbodens angebracht werden können und so eine stabile Abstützung des Regalfachbodens durch die Wägezellen entsteht. In einer Ausführungsform weist der Messkörper entlang seiner Längsachse eine Länge, von der Oberseite des oberen Gelenkelements zur Unterseite des unteren Gelenkelements eine Höhe und in der zur Länge und Höhe rechtwinklig stehenden Dimension eine Breite auf. Die Breite des Messkörpers ist zwischen 3 mm und 40 mm, insbesondere zwischen 5 mm und 20 mm. Die Länge des Messkörpers beträgt das 15 bis 25 fache, insbesondere das 16 bis 20 fache der Breite. Die Höhe des Messkörpers beträgt das 5 bis 10 fache, insbesondere das 5 bis 8 fache der Breite des Messkörpers. Im Vergleich zu aus dem Stand der Technik bekannten Wägezellen ist der Messkörper der erfindungsgemäßen Wägezelle sehr schmal und sehr hoch. Das hat den Vorteil, dass die Messkörper ideal in eine Regalkonsole eingebaut werden können und die Abmessungen der Regalkonsole nur wenig beeinflussen. Es ist wünschenswert, die Regalkonsole auf eine geringe Breite zu optimieren, was mit einer Wägezelle, die auf diesem Messkörper basiert, möglich ist. Durch die veränderten Dimensionen ist das mechanische Verhalten des Messkörpers unter einer Krafteinwirkung von oben von dem von herkömmlichen Wägezellen stark unterschiedlich. Diese Dimensionierung hat insbesondere den überraschenden Vorteil, dass aufgrund der Form des Messkörpers die Dünnstellen nicht separat und vor allem nicht individuell nachbearbeitet werden müssen. Aufgrund der Dimensionierung des Messkörpers wirken sich Toleranzen messtechnisch weniger aus. So können alle vier Dünnstellen gleich ausgebildet sein, wohingegen bei Messkörpern im Stand der Technik die Dünnstellen am oberen und unteren Gelenkabschnitt eine unterschiedliche Dicke haben und oft bei der Fertigung individuell nachbearbeitet, das heißt abgeglichen, werden müssen.

In einer Ausführungsform beträgt die Länge des Krafteinleitungsabschnitts entlang der Längsachse des Messkörpers zwischen 15 % und 25 %, insbesondere 20 % der Länge des Messkörpers. Die Länge des Gelenkabschnitts entlang der Längsachse des Messkörpers beträgt zwischen 20 % und 30 %, insbesondere 25 % der Länge des Messkörpers. Die Länge des Kraftaufnahmeabschnitts entlang der Längsachse des Messkörpers beträgt zwischen 65 % und 45 %, insbesondere 55 % der Länge des Messkörpers. In einer Ausführungsform umfasst der Messkörper mindestens drei, insbesondere vier Befestigungslöcher, die als Bohrungen ausgebildet sind und in horizontaler Richtung durch den Messkörper verlaufen und wobei insbesondere die Bohrungen auf einer Seite Versenkungen enthalten, die zur Aufnahme von Senkköpfen von Schrauben ausgebildet sind. Der Kraftaufnahmeabschnitt ist im Gegensatz zu bekannten Wägezellen relativ groß ausgebildet. Dies ermöglicht eine Anordnung der Schrauben zur Befestigung des Messkörpers in einer Richtung quer zur Verformungsrichtung. Die Achsen der Befestigungsschrauben sind somit parallel zur Breite des Messkörpers, also entlang seiner kleinsten Dimension ausgerichtet. Die große Fläche des Kraftaufnahmeabschnitts ermöglicht ein stabiles Montieren des Messkörpers an der Befestigungsvorrichtung, ohne dass, durch eine Krafteinleitung am Krafteinleitungsabschnitt, nennenswerte mechanische Spannungen im Bereich der Befestigungslöcher auftreten. Somit beeinflussen die Befestigungslöcher nicht die Messgenauigkeit.

In einer Ausführungsform weist der Messkörper entlang seiner Längsachse von einem gelenkabschnittsnahen Teil des Kraftaufnahmeabschnitts bis zum Gelenkabschnitt eine Vertiefung auf, die zur zumindest teilweisen Aufnahme einer Leiterplatte mit darauf angeordneter Elektronik, insbesondere eines Analog-Digital-Wandlers zur Verarbeitung wenigstens eines Ausgangssignals des zumindest einen Dehnungsmessstreifens, ausgebildet ist.

In einer Ausführungsform umfasst die Regalkonsole beiderseits der vertikal angeordneten Rahmenkonstruktion oder beiderseits des vertikal angeordneten Blechs jeweils zwei Befestigungsvorrichtungen. Jede der vier Befestigungsvorrichtungen trägt eine Wägezelle. Die beiden Wägezellen, die sich auf der gleichen Seite der Rahmenkonstruktion oder des vertikalen Blechs befinden, tragen jeweils ein Ende einer Strebe eines Regalfachbodens. Eine solche Regalkonsole kann eingesetzt werden als mittlere Regalkonsole in einer Regalwand, so dass auf beiden Seiten der Regalkonsole Regalfächer ausgebildet sind.

In einer Ausführungsform ermittelt die Auswerteeinheit bei einer Änderung des Gesamtgewichts einen Vektor zwischen den vorhergehenden Schwerpunktkoordinaten und den neuen Schwerpunktkoordinaten. Der von der Steuereinheit bestimmte Regalbereich wird aus dem Vektor und dem Gesamtgewicht von der Steuereinheit ermittelt.

In einer Ausführungsform tariert die Auswerteeinheit alle Wägezellen periodisch und gleichzeitig. Die aus den Daten der Wägezelle gebildeten Schwerpunktskoordinaten bilden den Schwerpunkt ab, an dem etwas aus dem Regalfachboden entnommen oder zugefügt wurde. In einer Ausführungsform bildet die Auswerteeinheit zur Ermittlung der neuen Schwerpunktskoordinaten für jede Wägezelle die Differenz aus einem neuen Gewichtswert und einem vorhergehenden Gewichtswert. Das heißt, bei einer Entnahme oder einem Hinzufügen eines Produkts auf den Regalfachboden wird die Gewichtsänderung an jeder Wägezelle separat ermittelt. Aus den vier Differenzwerten, das heißt, aus der Gewichtsänderung an jeder Wägezelle, werden die neuen Schwerpunktskoordinaten ermittelt. Beide Ausführungsformen führen dazu, dass die gemessenen Gewichtswerte der vier Wägezellen separat betrachtet werden und nicht ein Vektor berechnet wird, der skaliert werden muss. Somit sind diese beiden Ausführungsformen weniger sensitiv gegenüber Toleranzen bei der Gewichtswertbestimmung durch die Wägezellen.

Einige Ausführungsformen der Erfindung sind in den Zeichnungen beispielhaft gezeigt und nachfolgend beschrieben. Es zeigen, jeweils in schematischer Darstellung:

Fig. 1     eine erfindungsgemäße Regalkonsole mit zwei Wägezellen in einer Seitenansicht,

Fig. 2     eine erfindungsgemäße Regalkonsole mit zwei Wägezellen in einer isometrischen Ansicht,

Fig. 3     einen Ausschnitt einer erfindungsgemäßen Regalkonsole mit einer Befestigungsvorrichtung für eine Wägezelle in einer ersten Seitenansicht,

Fig. 4     eine Messkörper für eine erfindungsgemäße Regalkonsole in einer Seitenansicht,

Fig. 5     eine Messkörper für eine erfindungsgemäße Regalkonsole in einer zweiten Seitenansicht,

Fig. 6     eine Wägezelle für eine erfindungsgemäße Regalkonsole in einer zweiten Seitenansicht,

Fig. 7     eine Wägezelle für eine erfindungsgemäße Regalkonsole in einer isometrischen Ansicht,

Fig. 8     den Krafteinleitungsabschnitt mit Einsatz und Kraftübertragungselement einer Wägezelle in einer ersten Seitenansicht,

Fig. 9     den Krafteinleitungsabschnitt mit Einsatz und Kraftübertragungselement sowie Regalstrebe in einer Explosionszeichnung,

Fig. 10    ein Messkörper einer Wägezelle einer erfindungsgemäßen Regalkonsole mit zwei Dehnungsmessstreifen auf dem oberen Gelenkelement in einer isometrischen Ansicht,

Fig. 11    ein Messkörper einer Wägezelle einer erfindungsgemäßen Regalkonsole mit vier Dehnungsmessstreifen auf dem oberen Gelenkelement in einer isometrischen Ansicht,

Fig. 12    ein Regalfachboden,

Fig. 13    ein Blockdiagramm eines erfindungsgemäßen Regals,

Fig. 14    ein Verfahren zum Betrieb eines Regals,

Fig. 15    ein erstes Verfahren zur Bestimmung eines Ortes auf dem Regalfachboden, an dem ein Produkt entnommen oder zugefügt wurde,

Fig. 16    ein zweites Verfahren zur Bestimmung eines Ortes auf dem Regalfachboden, an dem ein Produkt entnommen oder zugefügt wurde, und

Fig. 17    ein drittes Verfahren zur Bestimmung eines Ortes auf dem Regalfachboden, an dem ein Produkt entnommen oder zugefügt wurde.

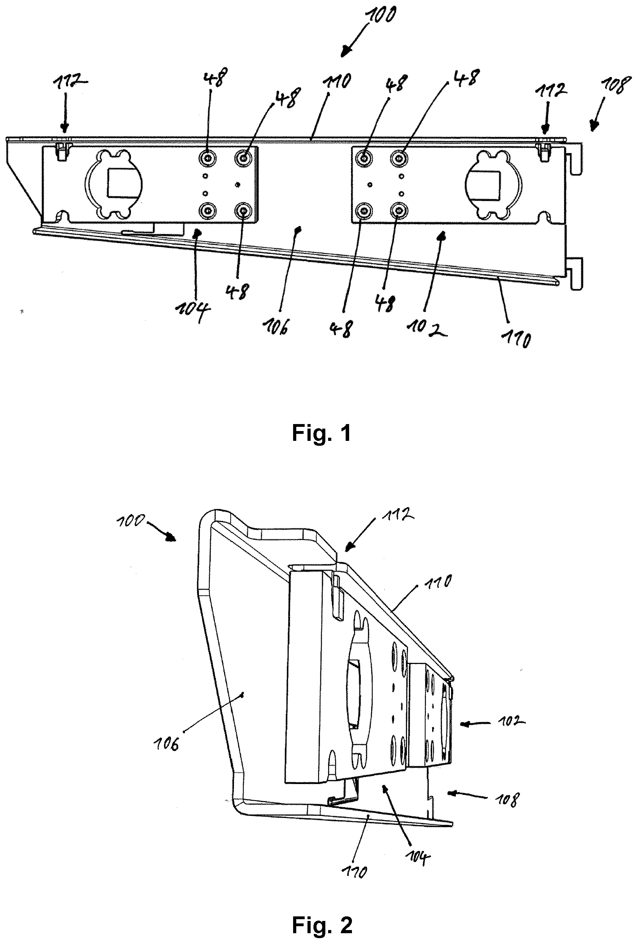

Fig. 1 zeigt eine Regalkonsole 100 in einer Seitenansicht, die in Fig. 2 in einer isometrischen Ansicht von vorne gezeigt ist. Die Regalkonsole 100 besteht aus einem vertikalen Ausleger 106, der aus einem vertikal angeordneten Blech gebildet ist. Um die Stabilität zu erhöhen und um an der Regalkonsole 100 angebrachte Wägezellen 102, 104 zu schützen, weist der Ausleger 106 an seiner Oberseite und an seiner Unterseite eine Abkantung 110 auf. Die Regalkonsole 100 umfasst an einem axialen Ende des Auslegers 106 eine Verankerungsvorrichtung 108 in der Form von zwei Haken, mit der die Regalkonsole in einer Regalschiene befestigt werden kann. Regalschienen sind oft als vertikal angebrachte Schienen mit übereinander angeordneten Schlitzen ausgebildet, so dass die Regalkonsolen auf verschiedenen Höhen an der Regalschiene befestigt werden können. Zwei Regalkonsolen 100, die an zwei beabstandeten Regalschienen auf gleicher Höhe angebracht sind, tragen einen Regalfachboden und bilden so ein Regalfach. Der Ausleger 106 ist dreieckförmig ausgebildet, das heißt, im Bereich der Verankerungsvorrichtung 108 ist die Höhe des Auslegers größer als am gegenüberliegenden axialen Ende, das dem vorderen Bereich des Regalfachs entspricht. Die obere Abkantung 110 umfasst für jede Wägezelle 102, 104 jeweils eine Öffnung 112, durch die eine Strebe eines Regalfachbodens durchgreifen kann, wenn der Regalfachboden mit der Strebe auf einem Krafteinleitungsabschnitt der Wägezelle 102, 104 aufliegt. Die zwei Wägezellen 102, 104 sind mit jeweils vier Senkschrauben 48 an einer in Fig. 1 und Fig. 2 nicht zu sehenden Befestigungsvorrichtung festgeschraubt. Eine optionale Abdeckung, die an der oberen und unteren Abkantung 110 befestigt wird und parallel zum Ausleger 106 auf der gegenüberliegenden Seite der Wägezellen 102, 104 verläuft, um die Wägezellen 102, 104 mechanisch zu schützen, ist nicht gezeigt. Auch die optionale Abdeckung hat in einem Bereich korrespondierend zum Bereich der Öffnungen 112 der Abkantung 110 jeweils eine Öffnung, um das Aufliegen der Streben des Regalfachbodens auf den Krafteinleitungsabschnitten der Wägezellen 102, 104 zu ermöglichen. Die Wägezellen 102, 104 sind symmetrisch aufgebaut, so dass sie mit ihren Kraftaufnahmeabschnitten in Richtung der Mitte des Auslegers 106 befestigt sind und die Krafteinleitungsabschnitte der Wägezellen 102, 104 in Richtung der axialen Enden des Auslegers 106 angeordnet sind. So stützen die Wägezellen 102, 104 den Regalfachboden im Bereich seiner Ecken.

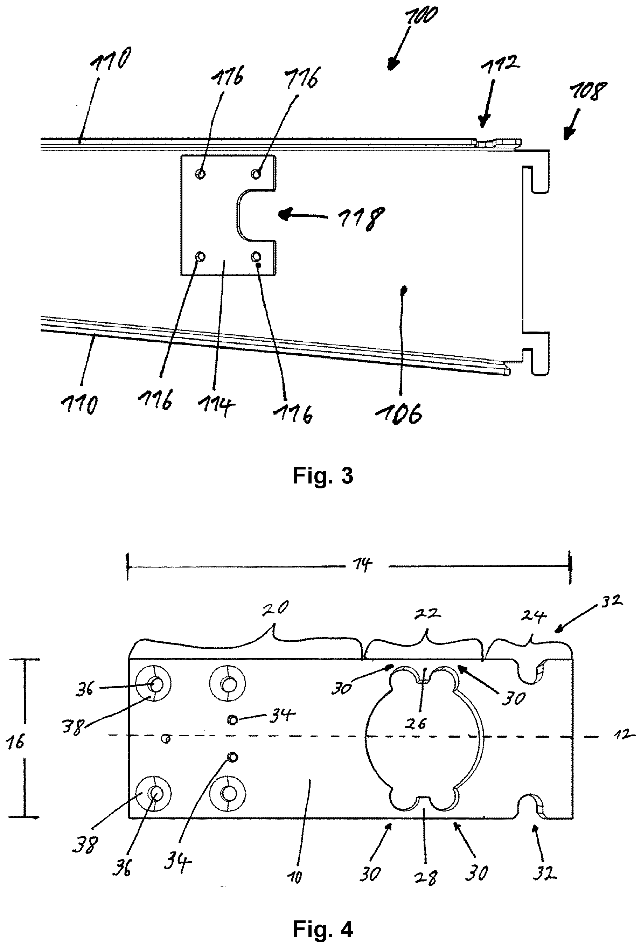

Fig. 3 zeigt einen Ausschnitt einer Regalkonsole mit der Verankerungsvorrichtung 108 und einem Teil des Auslegers 106. Eine Befestigungsvorrichtung 114, die am Ausleger 106 angebracht ist und zur Aufnahme einer Wägezelle mit ihrem Kraftaufnahmeabschnitt geeignet ist, ist gezeigt. Die Befestigungsvorrichtung 114 umfasst vier Bohrungen 116, die Schrauben zum Festschrauben der Wägezelle aufnehmen. Die Befestigungsvorrichtung 114 umfasst ferner eine Aufnahme 118, in der eine Leiterplatte der Wägezelle zumindest teilweise aufgenommen wird.

In Fig. 1 bis 3 ist eine Regalkonsole 100 gezeigt, die von vorne betrachtet die linke Regalkonsole eines Regalfachs bildet. Ebenso muss ein Regalfach eine rechte Regalkonsole umfassen, so dass der Regalfachboden auf der linken Seite von der linken Regalkonsole und auf der rechten Seite von der rechten Regalkonsole getragen wird. Auf die Darstellung der rechten Regalkonsole ist verzichtet. Die rechte Regalkonsole ist spiegelsymmetrisch zur linken Regalkonsole aufgebaut. Für Regale, bei denen mehrere Regalfächer in Reihe nebeneinander angeordnet sind, gibt es Regalkonsolen, die die Ecken jeweils eines Regalfachbodens links und rechts der Regalkonsole tragen. Eine derartige Regalkonsole umfasst vier Wägezellen, wobei mit Bezug auf Fig. 2 zwei zusätzliche Wägezellen symmetrisch zu den vorderen Wägezellen 102, 104 hinter dem Ausleger 106 angeordnet sind.

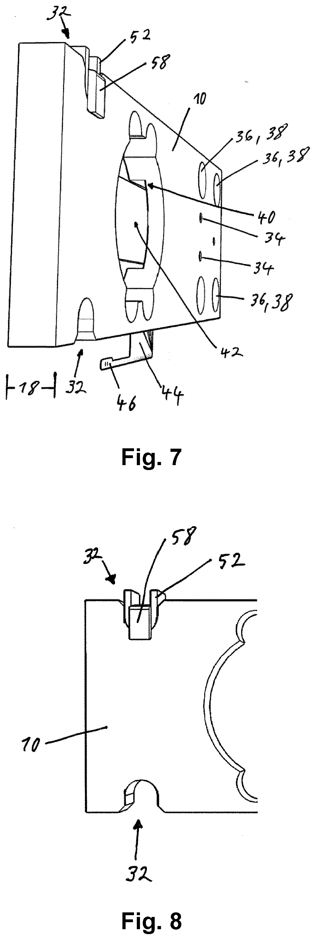

Fig. 4 zeigt schematisch einen Messkörper 10 in einer ersten Seitenansicht (Vorderansicht) für eine Wägezelle 102, 104 einer Regalkonsole 100. Der Messkörper 10 dient dabei als Verformungskörper, von dessen Verformung auf eine auf den Messkörper 10 wirkende Gewichtskraft rückgeschlossen wird. Der Messkörper 10 weist einen Krafteinleitungsabschnitt 24, einen Gelenkabschnitt 22 und einen Kraftaufnahmeabschnitt 20 auf. Am Krafteinleitungsabschnitt 24 wird eine zu messende Gewichtskraft angelegt. Mit seinem Kraftaufnahmeabschnitt 20 ist der Messkörper 10 an einer Befestigungsvorrichtung 114 einer Regalkonsole 100 angebracht. Der Messkörper 10 weist eine Längsachse 12 zwischen seinem kraftaufnahmeseitigen axialen Ende und seinem krafteinleitungsseitigen axialen Ende auf. Entlang seiner Längsachse 12 hat der Messkörper eine Ausdehnung in Längsrichtung, eine Länge 14. Rechtwinklig zur Ausdehnung entlang der Längsachse 12 hat der Messkörper eine Ausdehnung in vertikaler Richtung, eine Höhe 16. In Fig. 4 nicht gezeigt hat der Messkörper eine Ausdehnung in einer dritten Dimension, in Fig. 1 nach hinten, eine Breite 18 (siehe Fig. 7). Beispielhaft hat ein Messkörper 10 eine Breite 18 von 10 mm, eine Höhe 16 von 65 mm und eine Länge 14 von 180 mm. Entlang der Längsachse 12 nimmt der Krafteinleitungsabschnitt 24 ca. 20 %, der Gelenkabschnitt 22 ca. 25 % und der Kraftaufnahmeabschnitt 20 ca. 55 % der Länge 14 des Messkörpers 10 ein. In der Ansicht von Fig. 4 ist der Messkörper 10 symmetrisch entlang einer horizontalen Ebene, die den Messkörper in Richtung der Höhe mittig teilt. In dem Krafteinleitungsabschnitt 24 ist eine Aufnahme 32 vorgesehen, die den Messkörper 10 in Richtung seiner Breite 18 komplett durchdringt. Die Aufnahme 32 ist als Bohrung ausgebildet, die im Bereich der Oberseite des Messkörpers angebracht ist, wobei die Bohrung hin zu der Oberseite des Messkörpers 10 ausgefräst ist. Die Aufnahme 32 weist dementsprechend in Richtung des Messkörpers 10 im Messkörper 10 eine runde Kontur auf. Ebenfalls ist eine Aufnahme an der Unterseite des Messkörpers 10 im Bereich des Krafteinleitungsabschnitts ausgebildet. Der Messkörper 10 ist im Bereich des Gelenkabschnitts auf einem Großteil seiner Höhe von einer runden Öffnung durchdrungen. Im oberen und unteren Bereich der dadurch entstehenden Durchdringung sind jeweils zwei kleinere runde Öffnungen angebracht, die den Messkörper 10 ebenfalls vollständig durchdringen. So ist in dem Messkörper 10 ein oberes Gelenkelement 26, das zwei Dünnstellen 30 aufweist und ein unteres Gelenkelement 28, das zwei Dünnstellen 30 aufweist, gebildet. Die Dünnstellen 30 bewirken, dass das Gelenkelement 22 bei Krafteinwirkung am Krafteinleitungsabschnitt 24 verformt wird. Das Gelenkelement 22 ist ein Parallelogrammlenker. Im Kraftaufnahmeabschnitt 20 des Messkörpers 10 sind vier Befestigungslöcher 36 angebracht, die den Messkörper 10 ebenfalls in Richtung seiner Breite 18 durchdringen. Die Befestigungslöcher 36 sind mit Versenkungen 38 versehen, so dass der Messkörper 10 mit Senkschrauben 48 an die Befestigungsvorrichtung 114 einer Regalkonsole 100 geschraubt werden kann. Des Weiteren sind im Kraftaufnahmeabschnitt 20 des Messkörpers 10 Bohrungen 24 zur Befestigung einer Leiterplatte vorgesehen.

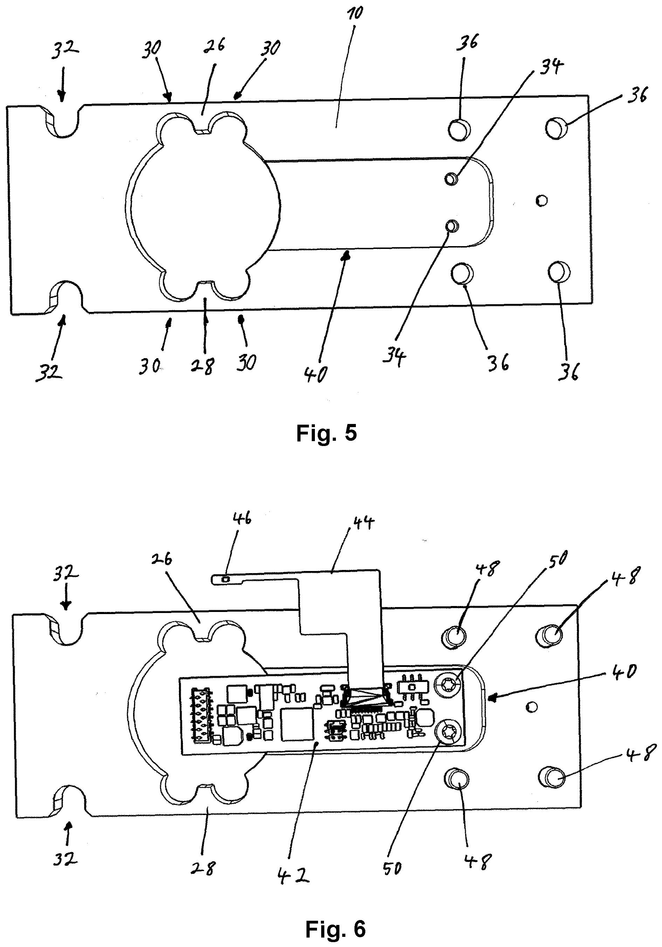

Fig. 5 zeigt einen Messkörper 10 nach Fig. 4 in einer zweiten Seitenansicht (Rückansicht). Des Messkörper aus Fig. 4 ist dabei entlang einer vertikalen Achse gedreht dargestellt. Im Bereich des Kraftaufnahmeabschnitts 20 befindet sich eine Vertiefung 40, die bis hin zum Gelenkabschnitt 22 reicht. Die Vertiefung 40 durchdringt den Messkörper 10 nicht. Durch die Vertiefung 40 entsteht keine zusätzliche Verformbarkeit des Messkörpers 10. Die Bohrungen 24 zur Befestigung einer Leiterplatte befinden sich innerhalb der Vertiefung 40. Die Vertiefung 40 ist zur zumindest teilweisen Aufnahme einer Leiterplatte vorgesehen, wobei auf der Leiterplatte Elektronik angeordnet ist, insbesondere ein Analog-Digital-Wandler zur Verarbeitung wenigstens eines Ausgangssignals von zumindest einem Dehnungsmessstreifen.

Fig. 6 zeigt die Wägezelle in einer Rückansicht. Der Messkörper 10 ist dabei gleich wie in Fig. 5 ausgerichtet. In den Befestigungslöchern 36 sind Schrauben 48 gezeigt, die dazu dienen, die Wägezelle mit ihrem Kraftaufnahmeabschnitt 20 an einer Befestigungsvorrichtung 114 festzuschrauben. Die Leiterplatte 42 ist mit Schrauben 50 in der Vertiefung 40 des Messkörpers 10 in den Bohrungen 34 für die Leiterplatte 42 festgeschraubt. Mit der Leiterplatte 42 ist eine Leiterfolie 44 verbunden, die zur Kontaktierung der Dehnungsmessstreifen dient. An der Leiterfolie 44 ist ein Temperatursensor 46 angebracht, der zum Temperaturabgleich dient. In einem an einer Befestigungsvorrichtung 114 einer Regalkonsole 100 angeschraubten Zustand ragt die Leiterplatte 42 oder die auf der Leiterplatte 42 angebrachte Elektronik in die Aufnahme 118 der Befestigungsvorrichtung 114. Die Befestigungsvorrichtung 114 dient ebenfalls als Abstandshalter zwischen Wägezelle 102, 104 und Ausleger 106, so dass die Leiterplatte 42 in diesem Abstand Platz findet.

Fig. 7 zeigt eine isometrische Ansicht einer Wägezelle mit einem Messkörper 10. In dieser Ansicht ist gut erkennbar, dass die Breite 18 des Messkörpers 10 im Verhältnis zu seiner Höhe 16 und zu seiner Länge 14 sehr schmal ist. Außerdem ist in Fig. 7 durch die Öffnung im Gelenkabschnitt 22 die Leiterplatte 42 in der Vertiefung 40 des Messkörpers 10 sichtbar. In der oberen Aufnahme 32 des Messkörpers 10 ist ein Einsatz 52 und ein Kraftübertragungselement 58 gezeigt, die im Folgenden genauer beschrieben sind. Durch die schmale Breite 18 der Wägezelle eignet sie sich ideal zum Anbringen an einer Regalkonsole 100, da eine Regalkonsole 100 vorzugsweise in Richtung ihrer Ausdehnung entlang des Regalfachs lang und hoch, in senkrechter Richtung dazu sehr schmal ausgebildet ist. Durch die geringe Breite 18 der Wägezelle muss von dieser Dimensionierung der Regalkonsole durch das integrieren einer Wägezelle 102, 104 nicht wesentlich abgewichen werden. Eine schmale Wägezelle ist für die Integration in einer Regalkonsole 100 und in einem Regal von elementarem Vorteil.

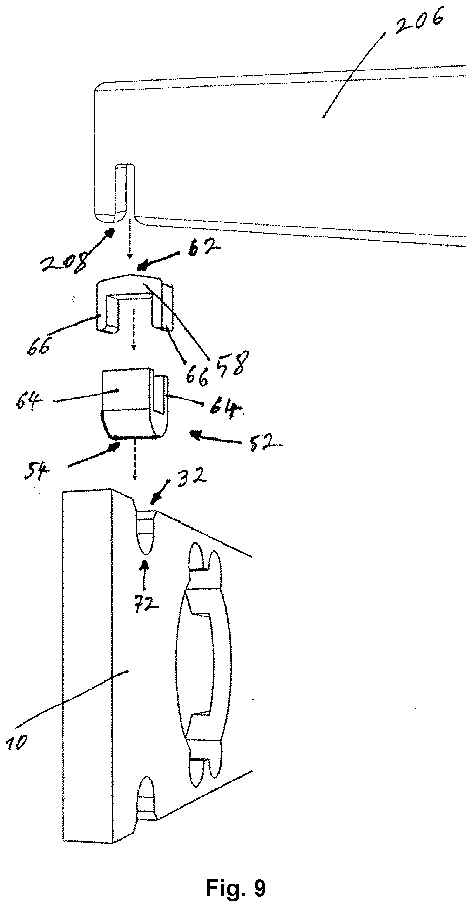

Fig. 8 zeigt den Krafteinleitungsabschnitt 24 eines Messkörpers 10 mit einem Einsatz 52, welcher formschlüssig in der runden Kontur der Aufnahme 32 des Messkörpers anliegt. Der Einsatz 52 haltert ein Kraftübertragungselement 58. Zur Verdeutlichung des Zusammenwirkens von Aufnahme 32, Einsatz 52 und Kraftübertragungselement 58 ist in Fig. 9 eine Explosionszeichnung des Messkörpers 10, des Einsatz 52, des Kraftübertragungselements 58 und einer Strebe 206 eines Regalfachbodens in isometrischer Ansicht dargestellt. Der Einsatz 52 wird in die Aufnahme 32 eingeführt, wobei die runde Kontur 54 an der Unterseite des Einsatz 32 formschlüssig in der runden Kontur 72 der Aufnahme 32 des Messkörpers 10 zu liegen kommt. Dabei ist der Einsatz 52 im Wesentlichen U-förmig ausgebildet und hat auf seiner Innenseite eine rechteckige Kontur. Der Einsatz 52 entspricht in seiner Breite der Breite 18 des Messkörpers 10. Das Kraftübertragungselement 58 ist ebenfalls im Wesentlichen U-förmig ausgebildet, jedoch um eine vertikale Achse im Vergleich zum Einsatz 52 um 90° gedreht. Außerdem ist das Kraftübertragungselement 58 im Vergleich zum Einsatz 52 um eine horizontale Achse um 180° gedreht. Das Kraftübertragungselement 58 hat auf seiner Innenseite eine rechteckige Kontur, die dazu vorgesehen ist, auf der rechteckigen Kontur des Einsatzes 52 aufzuliegen. Das Kraftübertragungselement 58 ist derart angeordnet, dass seine Flanken 66 über den Einsatz 52 hinweg greifen und teilweise über den Messkörper 10 hinausragen, so dass die U-förmige Struktur des Kraftübertragungselements 58 ein hinausrutschen des Einsatzes 52 aus der Aufnahme 32 und ein verrutschen des Kraftübertragungselements 58 selbst im Bezug auf den Messkörper 10 verhindern. Auf seiner Oberseite weist des Kraftübertragungselement 58 eine Schneide 62 auf, das heißt eine spitz zulaufende Kontaktachse für die Strebe eines Regalfachbodens. Im montierten Zustand des Einsatz 52 und des Kraftübertragungselements 58 ist die Schneide 62 des Kraftübertragungselements 58 parallel zur Längsachse 12 des Messkörpers 10 ausgerichtet. Die Flanken 64 des Einsatzes 52 ragen über die Schneide 62 des Kraftübertragungselements 58 hinaus, so dass sie eine Begrenzung der Schneide entlang der Längsachse 12 des Messkörpers 10 darstellen. Die Flanken 64 des Einsatzes 52 bilden eine Begrenzung für die Strebe 206 des Regalfachbodens. Die Strebe 206, die mit einer Ausnehmung 208 auf der Schneide 62 des Kraftübertragungselements 58 aufliegt und gewogen wird, wird von den Flanken 64 des Einsatzes 52 daran gehindert, über die Schneide 62 des Kraftübertragungselements 58 in Richtung der Längsachse 12 des Messkörpers 10 hinweg zu rutschen. Die Strebe 206 liegt so momentenfrei auf dem Krafteinleitungsabschnitt 24 der Wägezelle 102, 104 auf, was insbesondere deswegen notwendig ist, da der starre Regalfachboden mit seinen Streben 206 auf vier Wägezellen 102, 104 aufliegt und die Krafteinleitungsabschnitte 24 der vier Wägezellen 102, 104 durch den starren Regalfachboden nicht wechselseitig verspannt werden dürfen.

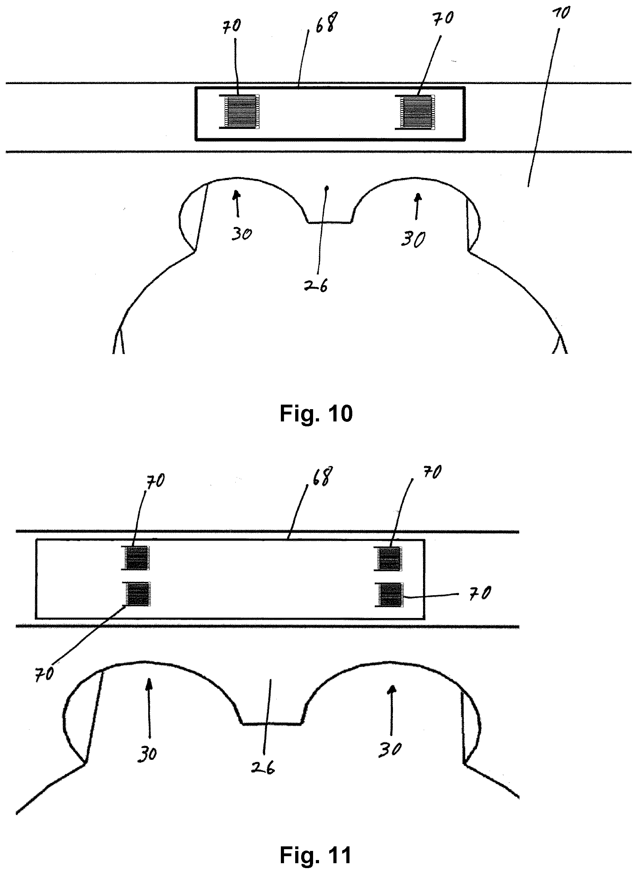

Fig. 10 zeigt eine isometrische Draufsicht auf den Gelenkabschnitt 20 des Messkörpers 10 der Wägezelle 102, 104. Auf den Dünnstellen 30 des oberen Gelenkelements 26 ist eine Dehnungsmessstreifen-Folie 68 mit zwei Dehnungsmessstreifen 70 angebracht. Der Übersichtlichkeit halber ist die Verschaltung der Dehnungsmessstreifen 70 auf der Folie sowie die Kontaktierung der Dehnungsmessstreifen-Folie nicht dargestellt. Die beiden Dehnungsmessstreifen 70 sind mit zwei weiteren Dehnungsmessstreifen, welche an der Unterseite des unteren Gelenkelements 28 angebracht sind, zu einer Wheatstoneschen Messbrücke (Brückenschaltung) verschaltet.

Über eine Kontaktierung sind die Dehnungsmessstreifen 70 mit der Leiterfolie 44 und somit mit der Leiterplatte 42 der Wägezelle verbunden. Fig. 11 zeigt eine isometrische Draufsicht auf den Gelenkabschnitt des Messkörpers 10 einer zweiten Variante der Wägezelle. Auf den Dünnstellen 30 des oberen Gelenkelements 26 ist eine Dehnungsmessstreifen-Folie 68 mit vier Dehnungsmessstreifen 70 angebracht. Die vier Dehnungsmessstreifen 70 sind auf der Dehnungsmessstreifen-Folie zu einer Wheatstoneschen Messbrücke verschaltet und über die Leiterfolie 44 mit der Leiterplatte 42 elektrisch verbunden. Die Ausrichtung der mäanderförmig angeordneten Widerstandsbahnen der Dehnungsmessstreifen 70 auf dem oberen Gelenkelement 26 oder auf dem oberen und unteren Gelenkelement 26, 28 ist immer in Richtung der Längsachse 12 des Messkörpers 10. Die Dehnungsmessstreifen 70 sind jeweils in horizontaler Richtung ausgerichtet. Das heißt, die Fläche, die durch die mäanderförmig angeordneten Widerstandsbahnen des Dehnungsmessstreifen 70 entsteht ist horizontal, so dass die Dehnungsmessstreifen 70 auf der Oberseite des oberen Gelenkelements 26 oder auf der Unterseite des unteren Gelenkelements 28 angeordnet sind. Die Ausrichtung dieser Fläche in einem kartesischen Koordinatensystem entspricht der Ausrichtung der schmalen langen Seite des Messkörpers 10.

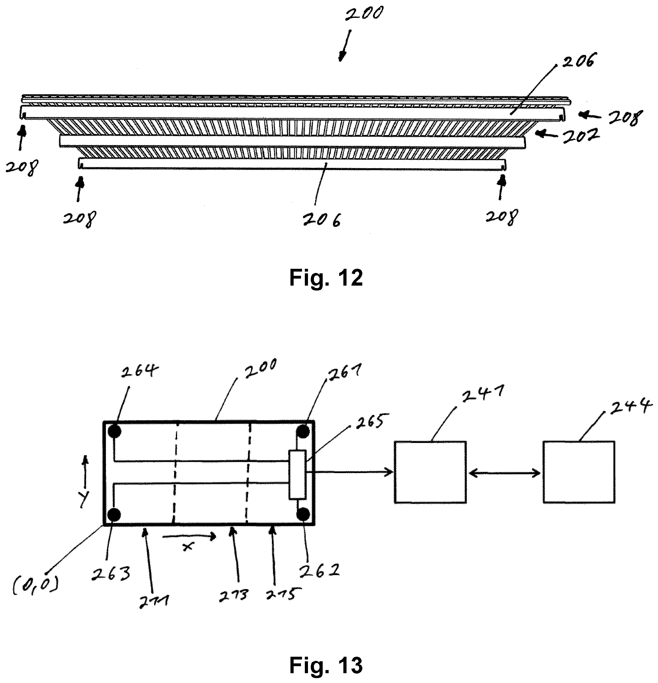

Fig. 12 zeigt einen Regalfachboden 200 ausgeführt als Gitterfachboden. Der Regalfachboden 200 umfasst eine starre Gitterstruktur 202, auf die Gegenstände in dem Regal aufgelegt werden können. Die Gitterstruktur 202 wird durch mindestens zwei Streben 206 getragen, die quer entlang des Regalfachbodens 200 verlaufen und sich im vorderen und hinteren Bereich des Regalfachbodens 200 befinden. Die Streben 206 weisen an ihren Enden jeweils eine Ausnehmung 208 auf, mit der die Streben auf jeweils einer Schneide 62 eines Kraftübertragungselements 58 momentenfrei abstützbar ist. So ist der Regalfachboden auf Krafteinleitungselementen 58 von vier Wägezellen 102, 104 abstützbar.

Fig. 13 zeigt schematisch drei Regalbereiche 211, 213, 215 auf einem Regalfachboden 200 und entsprechenden Komponenten zur Bestandsüberwachung. Die Bestimmung des Regalbereichs 211, 213, 215 aus dem ein Produkt auf dem Regalfachboden 200 entnommen oder zugefügt wurde, erfolgt mittels Schwerpunktermittlung des Regalfachbodens 200.

Der Regalfachboden 200 wird von den vier Wägezellen 261, 262, 263, 264 schwebend gehalten. Dabei handelt es sich um die Wägezellen 102, 104, die in die Regalkonsolen 100 integriert sind. Dabei stützen eine Regalkonsole 100 links des Regalfachbodens 200 und eine Regalkonsole 100 rechts des Regalfachbodens 200 den Regalfachboden 200. Die Wägezellen 261, 262, 263, 264 stützen mit ihren Krafteinleitungsabschnitten 24 den Regalfachboden 200 an den Enden seiner Streben 206. Die Wägezellen 261, 262, 263, 264 bestimmen unabhängig voneinander eine wirkende Gewichtskraft, die durch den Regalfachboden 200 und der in den Regalbereichen 211, 213, 215 abgelegten Produkte entsteht. Dabei wirkt auf jede Wägezelle 261, 262, 263, 264 anteilig von dem Gesamtgewicht eine einzelne Gewichtskraft. Die Daten aus den Wägezellen 261, 262, 263, 264 werden an eine Auswerteinheit 265 übermittelt. Die Auswerteeinheit bestimmt aus den einzelnen Gewichtsdaten der Wägezellen 261, 262, 263, 264 Schwerpunktkoordinaten des Regalfachbodens 200. Die Koordinaten im Regalbereich 211, 213, 215 beginnen in einer Ecke bei der Wägezelle 263 mit den Koordinaten (0, 0) und erstrecken sich in waagrechter Richtung X und in senkrechter Richtung Y.

Zur Veranschaulichung der Schwerpunktsermittlung werden den Wägezellen 261, 262, 263, 264 wie in Fig. 13 dargestellt die entsprechenden Gewichtsdaten W261, W262, W263, W264 zugewiesen.

Die Bildung des Schwerpunkts in X Richtung bestimmt sich wie folgt:

$$(W261 + W262) / (W261 + W262 + W263 + W264)$$

Die Bildung des Schwerpunkts in Y Richtung bestimmt sich wie folgt:

$$(W261 + W264) / (W261 + W262 + W263 + W264)$$

Mit einem entsprechenden Normierungsfaktor, der die Größe des Regalfachbodens 200 berücksichtigt, sind Koordinaten in dem Regalbereich 211, 213, 215 bestimmbar, die den Schwerpunktkoordinaten des Regalfachbodens 200 entsprechen. Diese Koordinaten werden in der Auswerteeinheit 265 auf Basis der Daten der Wägezellen 261, 262, 263, 264 ermittelt. Des Weiteren bildet die Auswerteeinheit 265 ein Gesamtgewicht W261 + W262 + W263 + W264. Die Schwerpunktkoordinaten und das Gesamtgewicht werden von der Auswerteeinheit 265 an eine Steuereinrichtung 241 übermittelt. Das Regal umfasst einen Speicher 244, in dem eine Zuordnung zwischen Schwerpunktkoordinaten und Regalbereichen 211, 213, 215 abgelegt ist. Im Speicher 244 ist des Weiteren für jeden Regalbereich 211, 213, 215 das durchschnittliche Gewicht eines Stücks einer Ware in diesem Regalbereich 211, 213, 215 abgelegt. Im Speicher 244 ist für jeden Regalbereich 211, 213, 215 der aktuelle Warenbestand, das heißt die aktuelle Anzahl von Waren/Stück in diesem Regalbereich 211, 213, 215 gespeichert. Mit dieser Anordnung sind neben den in Fig. 13 gezeigten Regalbereichen 211, 213, 215, die nebeneinander in X Richtung angeordnet sind, auch Regalbereiche zu ermitteln, die in X und Y Richtung in Reihen und Spalten, also in einer Matrix, angeordnet sind.

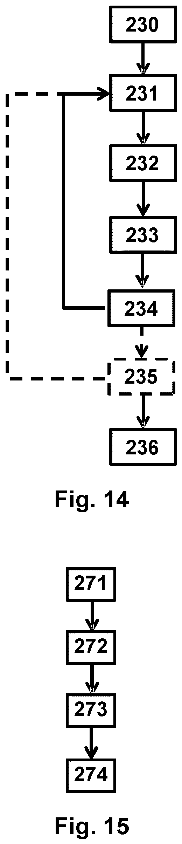

Fig. 14 zeigt ein Verfahren zur Bestandsüberwachung in einem Regal, das durch eine Steuereinrichtung 241 ausgeführt wird. In Schritt 230 werden die Regalbereiche 211, 213, 215 des Regalfachbodens 200 mit Waren bestückt. Dabei wird im Speicher 244 jedem Regalbereich 211, 213, 215 die Ware zugewiesen und ein Gewicht pro Stück abgespeichert. Dabei handelt es sich um das durchschnittliche Gewicht pro Stück, da das Gewicht zum Beispiel von Backwaren leicht voneinander abweichen kann. Die Abweichungen befinden sich jedoch in einem Bereich und sind statistisch so verteilt, dass sie für das Verfahren keine Rolle spielen. Des Weiteren wird im Speicher 244 für jeden Regalbereich 211, 213, 215 die Anzahl von Waren abgelegt, die sich nach dem Befüllen des Regals auf dem Regalfachboden 200 befinden. Des Weiteren sind im Speicher 244 die X und Y Koordinaten jedes Regalbereichs 211, 213, 215 hinterlegt. Diese müssen nicht bei jedem Befüllen neu hinterlegt werden, da sie sich nicht ändern. Wird jedoch die Größe der Regalbereiche 211, 213, 215 und deren Anordnung durch eine Neuanordnung der Zwischenwände geändert, so muss im Speicher 244 die Zuordnung zwischen X und Y Koordinaten und Regalbereichen 211, 213, 215 aktualisiert werden. Somit ist im Speicher 244 hinterlegt, über welche X und Y Koordinaten sich jeder Regalbereich 211, 213, 215 erstreckt. Des Weiteren ist im Speicher 244 ein Grenzwert für jeden Regalbereich 211, 213, 215 hinterlegt, bei dessen Unterschreitung das Regal eine Nachricht ausgeben soll, dass neue Waren in diesem Regalbereich 211, 213, 215 aufgefüllt werden müssen. In Schritt 231 wird mittels einer Auswerteeinheit 265 aus den Gewichtswerten der Wägezellen 261, 262, 263, 264 ein Ort bestimmt, an dem eine Ware oder Waren entnommen oder zugefügt wurden und das Gesamtgewicht der entnommenen oder zugefügten Waren. Die Bestimmung in Schritt 231 kann mit drei alternativen Verfahren ausgeführt werden, die mit Bezug zu Fig. 15 bis Fig. 17 im Folgenden beschrieben sind. In Schritt 232 wird mit der Steuereinrichtung 241 aufgrund der Koordinaten des Orts, an dem etwas entnommen oder zugefügt wurde und mithilfe der Information aus dem Speicher 244 über die Anordnung der Regalbereiche 211, 213, 215 der zugehörige Regalbereich 211, 213, 215 bestimmt. In Schritt 233 wird aus dem bestimmten Gesamtgewicht der entnommenen Waren und dem im Speicher 244 dem Regalbereich 211, 213, 215 zugeordneten Gewichtswert für eine Ware die Anzahl Waren bestimmt, die aus dem Regalbereich 211, 213, 215 entnommen oder zugefügt wurden. Es wird also die Stückzahl der entnommenen Gegenstände bestimmt. In Schritt 234 wird der dem Regalbereich 211, 213, 215 zugeordnete aktuelle Warenbestand um die Anzahl der entnommenen Waren reduziert, ggf. erhöht. Das Verfahren wird dann mit Schritt 231 mit der Entnahme oder dem Zufügen einer weiteren Ware fortgesetzt. Ist ein im Speicher 244 hinterlegter Grenzwert für den Warenbestand in einem Regalbereich 211, 213, 215 unterschritten, so schickt das Verfahren in Schritt 235 eine Nachricht an einen Bediener, so dass dieser informiert ist, dass der Warenbestand ein niedriges Niveau erreicht hat und aufgefüllt werden muss. In Schritt 236 werden durch den Bediener neue Informationen zum Warenbestand eingegeben, wenn er einen Regalbereich 211, 213, 215 mit neuen Waren befüllt hat. Die Informationen im Speicher 244 zum Warenbestand in diesem Regalbereich 211, 213, 215 werden dann entsprechend, durch die Bedienereingabe veranlasst, aktualisiert.

Fig. 15 zeigt schematisch ein erstes Verfahren zur Bestimmung eines Ortes auf dem Regalfachboden 200, an dem eine Ware hinzugefügt oder entnommen wurde. In Schritt 271 werden alle Wägezellen 261, 262, 263, 264 tariert, das heißt der Regalfachboden 200 und alle darauf aufgebrachten Waren werden so behandelt, als wären sie eine Vorlast für die Wägezellen 261, 262, 263, 264 und auf Null gesetzt. In Schritt 272 wird von zumindest einer Wägezelle 261, 262, 263, 264 ein neuer Gewichtswert gemessen und von der Auswerteeinrichtung 265 empfangen. In Schritt 273 berechnet die Auswerteeinrichtung 265 aufgrund der aktuellen Gewichtsdaten der Wägezellen 261, 262, 263, 264 Schwerpunktkoordinaten. Diese Schwerpunktkoordinaten spiegeln nicht den Schwerpunkt des Regalfachbodens 200 wieder, sondern vielmehr den Schwerpunkt der Gewichtsänderung im Koordinatensystem des Regalfachbodens 200. Dies ist der Ort, an dem eine Ware aus dem Regalfachboden 200 entnommen oder zugefügt wurde. In Schritt 274 wird dieser Ort und die Änderung des Gewichts an die Steuereinrichtung 241 weitergegeben.

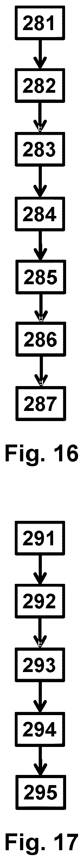

Fig. 16 zeigt schematisch ein zweites Verfahren zur Bestimmung eines Ortes auf dem Regalfachboden 200, an dem eine Ware hinzugefügt oder entnommen wurde. In Schritt 281 werden Schwerpunktkoordinaten vom aktuellen Schwerpunkt des Regalfachbodens 200 inklusiver aller Waren die darauf aufgelegt sind ermittelt. Dabei handelt es sich um den echten Schwerpunkt. Der Regalfachboden 200 oder zumindest die Waren die darauf aufgelegt sind, sind nicht tariert. In Schritt 282 wird von zumindest einer Wägezellen 261, 262, 263, 264 ein neuer Gewichtswert gemessen und von der Auswerteeinrichtung 265 empfangen. In Schritt 283 werden neue Schwerpunktkoordinaten von der Auswerteeinrichtung 265 aus den neuen Daten der Wägezellen 261, 262, 263, 264 bestimmt. In Schritt 284 wird aus den vorhergehenden Schwerpunktkoordinaten und den neuen Scherpunktkoordinaten ein Vektor gebildet, der die Verschiebung der Schwerpunktkoordinaten wiederspiegelt. Ausgehend vom vorhergehenden Schwerpunkt führt der Vektor, wenn er nicht skaliert wird, zum neuen Schwerpunkt. Anschließend wird Schritt 285 der Vektor mit Hilfe des Gesamtgewichts des Regalfachbodens und der Änderung des Gesamtgewichts skaliert. Der Ort, an dem ein Produkt aus dem Regalfachboden 200 entnommen wurde oder darauf abgelegt wurde ergibt sich in Schritt 286, indem zu den vorhergehenden Schwerpunktkoordinaten der skalierte Vektor addiert wird. In Schritt 287 wird dieser Ort und die Änderung des Gewichts an die an die Steuereinrichtung 241 weitergegeben.

Fig. 17 zeigt schematisch ein drittes Verfahren zur Bestimmung eines Ortes auf dem Regalfachboden 200, an dem eine Ware hinzugefügt oder entnommen wurde. In Schritt 291 wir durch alle Wägezellen 261, 262, 263, 264 jeweils ein Gewichtswert bestimmt, der vorhergehende Gewichtswert. In Schritt 292 wird von zumindest einer Wägezelle 261, 262, 263, 264 ein neuer Gewichtswert gemessen und von der Auswerteeinrichtung 265 empfangen. In Schritt 293 berechnet die Auswerteeinheit 265 für jede Wägezelle 261, 262, 263, 264 separat die Änderung des Gewichtswert, das heißt, die Auswerteeinheit bildet die Differenz aus dem neuen Gewichtswert und dem vorhergehenden Gewichtswert. In Schritt 294 berechnet die Auswerteeinrichtung 265 die Schwerpunktkoordinaten der Differenzwerte der vier Wägezellen 261, 262, 263, 264. Diese Schwerpunktkoordinaten spiegeln nicht den Schwerpunkt des Regalfachbodens 200 wieder, sondern vielmehr den Schwerpunkt der Gewichtsänderung im Koordinatensystem des Regalfachbodens 200. Dies ist der Ort, an dem eine Ware aus dem Regalfachboden 200 entnommen oder zugefügt wurde. In Schritt 295 wird dieser Ort und die Änderung des Gewichts an die Steuereinrichtung 241 weitergegeben.

Die Funktionen verschiedener in den Zeichnungen gezeigter Elemente, inklusive der Funktionsblöcke, können durch dezidierte Hardware oder durch generische Hardware, die in der Lage ist Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

## Patentansprüche

1. Regal bestehend aus mindestens zwei vertikal angeordneten Regalschienen und mindestens zwei auf gleicher Höhe in jeweils einer Regalschiene angeordneten Regalkonsolen (100) und mindestens einem auf den zwei auf gleicher Höhe angeordneten Regalkonsolen (100) aufgelegten Regalfachboden (200), wobei jede Regalkonsole eine Verankerungsvorrichtung (108) zum Befestigen in einer der vertikal angeordneten Regalschienen und einen Ausleger (106) zum Tragen des Regalfachbodens umfasst, wobei jede Regalkonsole zwei Wägezellen (102, 104) umfasst, wobei die Ausleger der Regalkonsolen in einer im Wesentlichen horizontalen Richtung von den Regalschienen abstehen und jeder Ausleger insbesondere durch eine vertikal angeordnete Rahmenkonstruktion oder ein vertikal angeordnetes Blech gebildet ist, wobei jeder Ausleger (106) Befestigungsvorrichtungen (114) für die zwei Wägezellen (102, 104) umfasst, wobei jede Wägezelle (102, 104) einen monolithisch ausgebildeten Messkörper (10) aufweist, der einen Kraftaufnahmeabschnitt (20), einen Krafteinleitungsabschnitt (24) und einen zwischen dem Kraftaufnahmeabschnitt (20) und dem Krafteinleitungsabschnitt (24) angeordneten Gelenkabschnitt (22) umfasst, und

   wobei der Regalfachboden (200) zwei parallel ausgebildete Streben (206) umfasst, und wobei die Krafteinleitungsabschnitte (24) der beiden Wägezellen (102, 104) einer Regalkonsole jeweils eine Strebe (206) des Regalfachbodens (200) abstützen, **dadurch gekennzeichnet, dass** der Messkörper (10) spiegelsymmetrisch zur horizontalen Ebene ist und der Kraftaufnahmeabschnitt (20) des Messkörpers (10) seitlich an der Befestigungsvorrichtung (114) angebracht ist, wobei der Messkörper (10) mindestens ein Befestigungsloch (36) aufweist, mittels dessen er mit einer horizontal durch den Messkörper (10) verlaufenden Schraube (48) an der Befestigungsvorrichtung (114) angebracht ist, und
   und wobei das Regal eine Auswerteeinheit (265) umfasst, die in periodischen Abständen oder bei einer Änderung des Gesamtgewichts, welches von den vier Wägezellen, auf deren Krafteinleitungsabschnitten der Regalfachboden (200) aufliegt, erfasst wird, aus den Daten der Wägezellen (261, 262, 263, 264) neue Schwerpunktskoordinaten ermittelt und diese an eine Steuereinheit (241) übermittelt, wobei die Steuereinheit (241) basierend auf Änderungen der Schwerpunktskoordinaten einen Regalbereich (211, 213, 215) ermittelt, wobei die Steuereinheit (41) aus der Änderung des Gesamtgewichts das Gewicht der in dem ermittelten Regalbereich (211, 213, 215) entnommenen oder zugefügten Waren bestimmt und den in einem Speicher (244) gespeicherten Warenbestand für diesen Regalbereich (211, 213, 215) aktualisiert.

2. Regal nach Anspruch 1, **dadurch gekennzeichnet, dass** der Messkörper (10) eine Längsachse (12) zwischen einem kraftaufnahmeseitigen axialen Ende und einem krafteinleitungsseitigen axialen Ende aufweist, und dass die Längsachse (12) der mindestens einen an einer Befestigungsvorrichtung angebrachten Wägezelle in einer horizontalen Richtung ausgebildet ist, wobei die Wägezelle mindestens einen in dem Bereich des Gelenkabschnitts (24) oberseitig oder unterseitig an dem Messkörper (10) angeordneten Dehnungsmessstreifen (70) zur Erfassung einer dehnenden oder stauchenden Verformung des Messkörpers (10) umfasst, wobei der mindestens eine Dehnungsmessstreifen (70) aus einer mäanderförmig parallel verlaufenden Widerstandsbahn besteht, die parallel zur Längsachse (12) des Messkörpers (10) und horizontal ausgerichtet ist.

3. Regal nach einem der Ansprüche 1 bis 2, **dadurch gekennzeichnet, dass** der Gelenkabschnitt (22) mindestens eine, insbesondere zwei Dünnstellen (30) an einem oberen Gelenkelement (26) aufweist und mindestens eine, insbesondere zwei Dünnstellen (30) an einem parallel zum oberen Gelenkelement (26) verlaufenden unteren Gelenkelement (28) aufweist.

4. Regal nach Anspruch 3, **dadurch gekennzeichnet, dass** die Wägezelle in den Bereichen der zwei Dünnstellen (39) des oberen Gelenkelements (26) jeweils einen oberseitig am oberen Gelenkelement (26) angeordneten Dehnungsmessstreifen (70) umfasst, und dass die Wägezelle in den Bereichen der zwei Dünnstellen (30) des unteren Gelenkelements (28) jeweils einen unterseitig am unteren Gelenkelement (28) angeordneten Dehnungsmessstreifen (70) umfasst, und wobei die vier Dehnungsmessstreifen (70) der Wägezelle zu einer Wheatstoneschen Messbrücke verschaltet sind, und wobei insbesondere die Verschaltung der zwei oberseitig angeordneten Dehnungsmessstreifen (70) und die zwei oberseitig angeordneten Dehnungsmessstreifen (70) auf einer Dehnungsmessstreifenfolie (68) angebracht sind und wobei insbesondere die Verschaltung der zwei unterseitig angeordneten Dehnungsmessstreifen (70) und die zwei unterseitig angeordneten Dehnungsmessstreifen (70) auf einer Dehnungsmessstreifenfolie (68) angebracht sind.

5. Regal nach ein Anspruch 3, **dadurch gekennzeichnet, dass** die Wägezelle in den Bereichen der zwei Dünnstellen (30) des oberen Gelenkelements (26) jeweils zwei oberseitig am oberen Gelenkelement (26) angeordnete Dehnungsmessstreifen (70) umfasst, wobei die jeweils zwei Dehnungsmessstreifen (70) parallel ausgerichtet und bezüglich einer schmalen Seite (18) des Messkörpers nebeneinander angeordnet sind, und wobei die vier Dehnungsmessstreifen (70) der Wägezelle zu einer Wheatstoneschen Messbrücke verschaltet sind, und wobei insbesondere die Verschaltung der Dehnungsmessstreifen (70) und die Dehnungsmessstreifen (70) auf einer Dehnungsmessstreifenfolie (68) angebracht sind.

6. Regal nach einem der Ansprüche 1 bis 5, **dadurch gekennzeichnet, dass** der Krafteinleitungsabschnitt (24) eine Aufnahme (32) aufweist, die als ein von der Oberseite des Messkörpers (10) ausgehender und senkrecht zur Längsachse verlaufender Einschnitt ausgebildet ist.

7. Regal nach Anspruch 6, **dadurch gekennzeichnet, dass** der Einschnitt der Aufnahme (32) auf seiner von der Oberseite des Messkörpers abgewandten Seite eine runde Kontur hat und die Wägezelle einen Einsatz (52) umfasst, der formschlüssig in der runden Kontur der Aufnahme (32) anliegt und wobei der Einsatz (52) auf seiner dem Formschluss mit der runden Kontur gegenüberliegenden Seite eine rechteckige Kontur zur Aufnahme eines Kraftübertragungselements (58) aufweist, und dass das Kraftübertragungselement (58) derart ausgebildet ist, dass es formschlüssig in der rechteckigen Kontur des Einsatzes (52) aufnehmbar ist, und dass das Kraftübertragungselement (58) eine Schneide (62) zum Abstützen einer Strebe (206) des Regalfachbodens (200) aufweist.

8. Regal nach einem der Ansprüche 1 bis 7, **dadurch gekennzeichnet, dass** der Messkörper (10) entlang seiner Längsachse (12) eine Länge (14), von der Oberseite des oberseitigen Gelenkelements (26) zur Unterseite des unterseitigen Gelenkelements (28) eine Höhe (16) und in der zur Länge und Höhe rechtwinklig stehenden Dimension eine Breite (18) aufweist, wobei die Breite (18) des Messkörpers zwischen 3 mm und 40 mm, insbesondere zwischen 5 mm und 20 mm ist, und wobei die Länge (14) des Messkörpers das 15 bis 25 fache, insbesondere das 16 bis 20 fache der Breite (18) ist und die Höhe (16) des Messkörpers das 5 bis 10 fache, insbesondere das 6 bis 8 fache der Breite (18) des Messkörpers ist und dass das vertikal angeordnete Blech oben und unten abgekantet ist und die abgekanteten Teile in horizontaler Richtung den Messkörper in seiner Breite abdecken oder überragen.

9. Regal nach einem der Ansprüche 1 bis 8, **dadurch gekennzeichnet, dass** der Messkörper (10) mindestens drei, insbesondere vier Befestigungslöcher (36) umfasst, die als Bohrungen ausgebildet sind und in horizontaler Richtung durch den Messkörper (10) verlaufen und mit denen der Messkörper an der Befestigungsvorrichtung (114) festgeschraubt ist und wobei insbesondere die Bohrungen (36) auf einer Seite Versenkungen (38) enthalten, die zur Aufnahme von Senkköpfen von Schrauben (48) ausgebildet sind.

10. Regal nach einem der Ansprüche 1 bis 9, **dadurch gekennzeichnet, dass** der Messkörper (10) entlang seiner Längsachse (12) von einem gelenkabschnittsnahen Teil des Kraftaufnahmeabschnitts (20) bis zum Gelenkabschnitt (22) eine Vertiefung (40) aufweist, die zur, zumindest teilweisen Aufnahme einer Leiterplatte (42) mit darauf angeordneter Elektronik, insbesondere eines Analog-Digital-Wandlers zur Verarbeitung wenigstens eines Ausgangssignals des zumindest einen Dehnungsmessstreifens, ausgebildet ist.

11. Regal nach einem der Ansprüche 1 bis 10, **dadurch gekennzeichnet, dass** die Regalkonsole (100) beiderseits der vertikal angeordneten Rahmenkonstruktion oder beiderseits des vertikal angeordneten Blechs jeweils zwei Befestigungsvorrichtungen (114) umfasst, die jeweils eine Wägezelle (102, 104) tragen, wobei jeweils zwei Wägezellen (102, 104) auf einer Seite die Streben eines Regalfachbodens (200) abstützen.

12. Regal nach einem der Ansprüche 1 bis 11, **dadurch gekennzeichnet, dass** die Auswerteeinheit (265) bei einer Änderung des Gesamtgewichts einen Vektor zwischen den vorhergehenden Schwerpunktkoordinaten und den neuen Schwerpunktkoordinaten ermittelt, und
dass der von der Steuereinheit (241) bestimmte Regalbereich (211, 213, 215) aus dem Vektor und dem Gesamtgewicht von der Steuereinheit (241) ermittelt wird.

13. Regal nach einem der Ansprüche 1 bis 11, **dadurch gekennzeichnet, dass** die Auswerteeinheit (265) alle Wägezellen (61, 62, 63, 64) periodisch und gleichzeitig tariert.

14. Regal nach einem der Ansprüche 1 bis 11, **dadurch gekennzeichnet, dass** die Auswerteeinheit (265) zur Ermittlung der neuen Schwerpunktskoordinaten für jede Wägezelle (261, 262, 263, 264) die Differenz aus einem neuen Gewichtswert und einem vorhergehenden Gewichtswert bildet und aus den vier Differenzwerten die neuen Schwerpunktskoordinaten ermittelt.

## Claims

1. Rack consisting of at least two vertically arranged rack rails and at least two rack supports (100) arranged at the same height in each rack rail and at least one shelf (200) placed on the two rack supports (100) arranged at the same height, wherein each rack support comprises an anchoring device (108) for fastening in one of the vertically arranged rack rails and a boom (106) for supporting the shelf, wherein each rack support comprises two load cells (102, 104), wherein the booms of the rack supports protrude from the rack rails in a substantially horizontal direction and each boom is formed in particular by a vertically arranged frame construction or a vertically arranged metal sheet, wherein each boom (106) comprises fastening devices (114) for the two load cells (102, 104), wherein each load cell (102, 104) has a monolithic measuring body (10) which comprises a force-absorbing section (20), a force-introducing section (24) and a joint section (22) arranged between the force-absorbing section (20) and the force-introducing section (24), and
wherein the shelf (200) comprises two parallel struts (206), and wherein the force-introducing sections (24) of the two load cells (102, 104) of a rack support each support a strut (206) of the shelf (200), **characterized in that** the measuring body (10) is mirror-symmetrical to the horizontal plane and the force-absorbing section (20) of the measuring body (10) is attached laterally to the fastening device (114), wherein the measuring body (10) has at least one fastening hole (36), by means of which it is attached to the fastening device (114) by a screw (48) running horizontally through the measuring body (10),
and wherein the rack comprises an evaluation unit (265) which, at periodic intervals or in the event of a change in the total weight which is detected by the four load cells on the force-introducing sections of which the shelf (200) rests, ascertains new centroid coordinates from the data from the load cells (261, 262, 263, 264) and transmits these centroid coordinates to a control unit (241), wherein the control unit (241) ascertains a rack region (211, 213, 215) based on changes in the centroid coordinates, wherein the control unit (41) determines, from the change in the total weight, the weight of the goods removed from or added to the ascertained rack region (211, 213, 215) and updates the inventory, stored in a memory (244), for this rack region (211, 213, 215).

2. Rack according to Claim 1, **characterized in that** the measuring body (10) has a longitudinal axis (12) between a force-receiving axial end and a force-introducing axial end, and **in that** the longitudinal axis (12) of the at least one load cell attached to a fastening device is configured in a horizontal direction, wherein the load cell comprises at least one strain gauge (70) arranged in the region of the joint section (24) on the top side or bottom side of the measuring body (10) for detecting a stretching or compressing deformation of the measuring body (10), wherein the at least one strain gauge (70) consists of a meandering parallel resistance track which is oriented parallel to the longitudinal axis (12) of the measuring body (10) and horizontally.

3. Rack according to either of Claims 1 and 2, **characterized in that** the joint section (22) has at least one thin point, in particular two thin points, (30) on an upper joint element (26) and at least one thin point, in particular two thin points, (30) on a lower joint element (28) running parallel to the upper joint element (26) .

4. Rack according to Claim 3, **characterized in that** the load cell comprises a strain gauge (70) arranged on the top side of the upper joint element (26) in each of the regions of the two thin points (39) of the upper joint element (26), and **in that** the load cell comprises a strain gauge (70) arranged on the bottom side of the lower joint element (28) in each of the regions of the two thin points (30) of the lower joint element (28), and wherein the four strain gauges (70) of the load cell are interconnected to form a Wheatstone measuring bridge, and wherein, in particular, the wiring of the two strain gauges (70) arranged on the top side and the two strain gauges (70) arranged on the top side are mounted on a strain gauge film (68), and wherein, in particular, the wiring of the two strain gauges (70) arranged on the bottom side and the two strain gauges (70) arranged on the bottom side are mounted on a strain gauge film (68).

5. Rack according to Claim 3, **characterized in that** the load cell comprises in each case two strain gauges (70) arranged on the top side of the upper joint element (26) in the regions of the two thin points (30) of the upper joint element (26), wherein the in each case two strain gauges (70) are oriented in parallel and arranged next to each other with respect to a narrow side (18) of the measuring body, and wherein the four strain gauges (70) of the load cell are interconnected to form a Wheatstone measuring bridge, and wherein, in particular, the wiring of the strain gauges (70) and the strain gauges (70) are mounted on a strain gauge film (68).

6. Rack according to any of Claims 1 to 5, **characterized in that** the force-introducing section (24) has a receptacle (32) which is configured as a notch extending from the top side of the measuring body (10) and running perpendicular to the longitudinal axis.

7. Rack according to Claim 6, **characterized in that** the notch in the receptacle (32) has, on its side facing away from the top side of the measuring body, a round contour and the load cell comprises an insert (52) which bears in a form-fitting manner in the round contour of the receptacle (32), and wherein the insert (52) has, on its side opposite the form-fitting connection with the round contour, a rectangular contour for receiving a force-transmitting element (58), and **in that** the force-transmitting element (58) is configured in such a way that it can be received in a form-fitting manner in the rectangular contour of the insert (52), and **in that** the force-transmitting element (58) has an edge (62) for supporting a strut (206) of the shelf (200).

8. Rack according to any of Claims 1 to 7, **characterized in that** the measuring body (10) has a length (14) along its longitudinal axis (12), a height (16) from the top side of the top-side joint element (26) to the bottom side of the bottom-side joint element (28), and a width (18) in the dimension perpendicular to the length and height, wherein the width (18) of the measuring body is between 3 mm and 40 mm, in particular between 5 mm and 20 mm, and wherein the length (14) of the measuring body is 15 to 25 times, in particular 16 to 20 times, the width (18), and the height (16) of the measuring body is 5 to 10 times, in particular 6 to 8 times, the width (18) of the measuring body, and **in that** the vertically arranged metal sheet is angled at the top and bottom and the angled parts cover or protrude beyond the width of the measuring body in the horizontal direction.

9. Rack according to any of Claims 1 to 8, **characterized in that** the measuring body (10) comprises at least three, in particular four, fastening holes (36) which are configured as bores and run in the horizontal direction through the measuring body (10) and with which the measuring body is firmly screwed to the fastening device (114), and wherein in particular the bores (36) contain, on one side, countersinks (38) which are configured for receiving countersunk heads of screws (48) .

10. Rack according to any of Claims 1 to 9, **characterized in that** the measuring body (10) has, along its longitudinal axis (12) from a part of the force-receiving section (20) close to the joint section to the joint section (22), a recess (40) which is configured for, at least partially, receiving a printed circuit board (42) with electronics, in particular of an analogue-digital converter for processing at least one output signal of the at least one strain gauge, arranged on it.

11. Rack according to any of Claims 1 to 10, **characterized in that** the rack support (100) comprises, on both sides of the vertically arranged frame construction or on both sides of the vertically arranged metal sheet, two fastening devices (114) in each case, the fastening devices each supporting a load cell (102, 104), wherein two load cells (102, 104) each support the struts of a shelf (200) on one side.

12. Rack according to any of Claims 1 to 11, **characterized in that** the evaluation unit (265) ascertains a vector between the previous centroid coordinates and the new centroid coordinates when the total weight changes, and
**in that** the rack region (211, 213, 215) determined by the control unit (241) is ascertained by the control unit (241) from the vector and the total weight.

13. Rack according to any of Claims 1 to 11, **characterized in that** the evaluation unit (265) periodically and simultaneously tares all the load cells (61, 62, 63, 64).

14. Rack according to any of Claims 1 to 11, **characterized in that** the evaluation unit (265), for ascertaining the new centroid coordinates for each load cell (261, 262, 263, 264), calculates the difference between a new weight value and a previous weight value and ascertains the new centroid coordinates from the four difference values.

**Revendications**

1. Rayonnage composé d'au moins deux rails de rayonnage disposés verticalement et d'au moins deux consoles de rayonnage (100) disposées à la même hauteur respectivement dans un rail de rayonnage et d'au moins une tablette de rayonnage (200) posée sur les deux consoles de rayonnage (100) disposées à la même hauteur, chaque console de rayonnage comprenant un dispositif d'ancrage (108) destiné à être fixé dans l'un des rails de rayonnage disposés verticalement et une potence (106) destinée à porter la tablette de rayonnage, chaque console de rayonnage comprenant deux cellules de pesage (102, 104), les potences des consoles de rayonnage dépassent des rails de rayonnage dans une direction sensiblement horizontale et chaque potence étant notamment formée par une construction de cadre disposée verticalement ou une tôle disposée verticalement, chaque potence (106) comportant des dispositifs de fixation (114) pour les deux cellules de pesage (102, 104), chaque cellule de pesée (102, 104) possédant un corps de mesure (10) de configuration monolithique qui comprend une portion de réception de force (20), une portion d'introduction de force (24) et une portion d'articulation (22) disposée entre la portion de réception de force (20) et la portion d'introduction de force (24), et
la tablette de rayonnage (200) comprenant deux contrefiches (206) en parallèle, et les portions d'introduction de force (24) des deux cellules de pesage (102, 104) d'une console de rayonnage soutenant respectivement une contrefiche (206) de la tablette de rayonnage (200), **caractérisé, en ce que** le corps de mesure (10) est à symétrie miroir par rapport au plan horizontal et la portion de réception de force (20) du corps de mesure (10) est montée latéralement sur le dispositif de fixation (114), le corps de mesure (10) possédant au moins un trou de fixation (36) au moyen duquel il est monté sur le dispositif de fixation (114) avec une vis (48) qui suit un tracé horizontal à travers le corps de mesure (10),
et le rayonnage comprenant une unité d'évaluation (265) qui, à intervalles périodiques ou lors d'une modification du poids total, lequel est capté par les quatre cellules de pesage sur les portions d'introduction de force desquelles repose la tablette de rayonnage (200), identifie de nouvelles coordonnées du centre de gravité à partir des données des cellules de pesage (261, 262, 263, 264) et transmet celles-ci à une unité de commande (241), l'unité de commande (241) identifiant une zone de rayonnage (211, 213, 215) sur la base des modifications des coordonnées du centre de gravité, l'unité de commande (41) déterminant, à partir de la modification du poids total, le poids des marchandises prélevées ou ajoutées dans la zone de rayonnage (211, 213, 215) identifiée et actualisant le stock de marchandises stocké dans une mémoire (244) pour cette zone de rayonnage (211, 213, 215) .

2. Rayonnage selon la revendication 1, **caractérisé en ce que** le corps de mesure (10) présente un axe longitudinal (12) entre une extrémité axiale côté réception de force et une extrémité axiale côté introduction de force, et **en ce que** l'axe longitudinal (12) de l'au moins une cellule de pesage montée sur un dispositif de fixation est configuré dans une direction horizontale, la cellule de pesage comprenant au moins une jauge de contrainte (70) disposée dans la zone de la portion d'articulation (24) du côté supérieur ou du inférieur du corps de mesure (10) destinée à capter une déformation d'extension ou de compression du corps de mesure (10), l'au moins une jauge de contrainte (70) étant constituée d'une piste de résistance qui suit un tracé parallèle en forme de méandres, qui est parallèle à l'axe longitudinal (12) du corps de mesure (10) et orientée horizontalement.

3. Rayonnage selon l'une des revendications 1 à 2, **caractérisée en ce que** la portion d'articulation (22) présente au moins un, notamment deux, points minces (30) au niveau d'un élément d'articulation supérieur (26) et présente au moins un, notamment deux, points minces (30) au niveau d'un élément d'articulation inférieur (28) qui suit un tracé parallèle à l'élément d'articulation supérieur (26).

4. Rayonnage selon la revendication 3, **caractérisé en ce que** la cellule de pesage comprend respectivement, dans les zones des deux points minces (39) de l'élément d'articulation supérieur (26), une jauge de contrainte (70) disposée du côté supérieur au niveau de l'élément d'articulation supérieur (26), et **en ce que** la cellule de pesage comprend respectivement, dans les zones des deux points minces (30) de l'élément d'articulation inférieur (28), une jauge de contrainte (70) disposée du côté inférieur au niveau de l'élément d'articulation inférieur (28), et les quatre jauges de contrainte (70) de la cellule de pesage étant connectées en un pont de mesure de Wheatstone, et notamment la connexion des deux jauges de contrainte (70) disposées du côté supérieur ainsi que les deux jauges de contrainte (70) disposées du côté supérieur étant appliquées sur une feuille de jauge de contrainte (68) et notamment la connexion des deux jauges de contrainte (70) disposées du côté inférieur ainsi que les deux jauges de contrainte (70) disposées du côté inférieur étant appliquées sur une feuille de jauge de contrainte (68).

5. Rayonnage selon la revendication 3, **caractérisé en ce que** la cellule de pesage comprend dans les zones des deux zones minces (30) de l'élément d'articulation supérieur (26) respectivement deux jauges de contrainte (70) disposées du côté supérieur au niveau de l'élément d'articulation supérieur (26), les deux jauges de contrainte (70) respectives étant orientées en parallèle et disposées l'une à côté de l'autre par rapport à un côté étroit (18) du corps de mesure, et les quatre jauges de contrainte (70) de la cellule de pesage étant connectées en un pont de mesure de Wheatstone, et notamment la connexion des jauges de contrainte (70) ainsi que les jauges de contrainte (70) étant appliquées sur une feuille de jauge de contrainte (68).

6. Rayonnage selon l'une des revendications 1 à 5, **caractérisé en ce que** la portion d'introduction de force (24) possède un logement (32) qui est réalisé sous la forme d'une entaille qui part du côté supérieur du corps de mesure (10) et suit un tracé perpendiculairement à l'axe longitudinal.

7. Rayonnage selon la revendication 6, **caractérisé en ce que** l'entaille du logement (32) a un contour rond sur son côté à l'opposé du côté supérieur du corps de mesure et la cellule de pesage comprend un insert (52) qui repose par complémentarité de forme dans le contour rond du logement (32) et l'insert (52) présentant, sur son côté opposé à la complémentarité de forme avec le contour rond, un contour rectangulaire destiné à recevoir un élément de transmission de force (58), et **en ce que** l'élément de transmission de force (58) est configuré de telle sorte qu'il peut être accueilli avec complémentarité de forme dans le contour rectangulaire de l'insert (52), et **en ce que** l'élément de transmission de force (58) possède une arête (62) destinée à soutenir une contrefiche (206) de la tablette de rayonnage (200).

8. Rayonnage selon l'une des revendications 1 à 7, **caractérisé en ce que** le corps de mesure (10) présente une longueur (14) le long de son axe longitudinal (12), une hauteur (16) depuis le côté supérieur de l'élément d'articulation côté supérieur (26) jusqu'au côté inférieur de l'élément d'articulation côté inférieur (28) et une largeur (18) dans la dimension qui se trouve perpendiculaire à la longueur et à la hauteur, la largeur (18) du corps de mesure étant comprise entre 3 mm et 40 mm, notamment entre 5 mm et 20 mm, et la longueur (14) du corps de mesure étant de 15 à 25 fois, notamment de 16 à 20 fois, la largeur (18) et la hauteur (16) du corps de mesure étant de 5 à 10 fois, notamment de 6 à 8 fois, la largeur (18) du corps de mesure et **en ce que** la tôle disposée verticalement est pliée en haut et en bas et les parties pliées dans la direction horizontale recouvrent le corps de mesure ou dépassent de celui-ci dans sa largeur.

9. Rayonnage selon l'une des revendications 1 à 8, **caractérisé en ce que** le corps de mesure (10) comporte au moins trois, notamment quatre trous de fixation (36), lesquels sont réalisés sous forme de perçages et suivent un tracé dans la direction horizontale à travers le corps de mesure (10) et avec lesquels le corps de mesure est vissé au dispositif de fixation (114) et les perçages (36) contenant notamment, sur un côté, des enfoncements (38) qui sont réalisés pour recevoir des têtes fraisées de vis (48).

10. Rayonnage selon l'une des revendications 1 à 9, **caractérisé en ce que** le corps de mesure (10) possède, le long de son axe longitudinal (12), depuis une partie proche de la portion d'articulation de la portion de réception de force (20) jusqu'à la portion d'articulation (22), un renfoncement (40) qui est configuré pour recevoir au moins partiellement une carte de circuit imprimé (42) sur laquelle est disposée une électronique, notamment un convertisseur analogique-numérique destiné au traitement d'au moins un signal de sortie de l'au moins une jauge de contrainte.

11. Rayonnage selon l'une des revendications 1 à 10, **caractérisé en ce que** la console de rayonnage (100) comprend respectivement, des deux côtés de la construction de cadre disposée verticalement ou des deux côtés de la tôle disposée verticalement, deux dispositifs de fixation (114) qui portent chacun une cellule de pesage (102, 104), deux cellules de pesage (102, 104) soutenant respectivement, sur un côté, les contrefiches d'une tablette de rayonnage (200).

**12.** Rayonnage selon l'une des revendications 1 à 11, **caractérisé en ce que** l'unité d'évaluation (265), lors d'une modification du poids total, identifie un vecteur entre les coordonnées précédentes du centre de gravité et les nouvelles coordonnées du centre de gravité, et **en ce que** la zone de rayonnage (211, 213, 215) déterminée par l'unité de commande (241) est identifiée par l'unité de commande (241) à partir du vecteur et du poids total.

**13.** Rayonnage selon l'une des revendications 1 à 11, **caractérisé en ce que** l'unité d'évaluation (265) tare périodiquement et simultanément toutes les cellules de pesage (61, 62, 63, 64).

**14.** Rayonnage selon l'une des revendications 1 à 11, **caractérisé en ce que** l'unité d'évaluation (265), en vue d'identifier les nouvelles coordonnées du centre de gravité, forme pour chaque cellule de pesage (261, 262, 263, 264) la différence entre une nouvelle valeur de poids et une valeur de poids précédente et identifie les nouvelles coordonnées du centre de gravité à partir des quatre valeurs de différence.

**Fig. 1**

**Fig. 2**

**Fig. 3**

**Fig. 4**

**Fig. 5**

**Fig. 6**

**Fig. 7**

**Fig. 8**

Fig. 9

Fig. 10

Fig. 11

**Fig. 12**

**Fig. 13**

```
      ┌───────┐
      │  230  │
      └───────┘
          │
          ▼
      ┌───────┐
──────▶│  231  │
      └───────┘
          │
          ▼
      ┌───────┐
      │  232  │
      └───────┘
          │
          ▼
      ┌───────┐
      │  233  │
      └───────┘
          │
          ▼
      ┌───────┐
      │  234  │
      └───────┘
          │
          ▼
      ┌╌╌╌╌╌╌╌┐
      ┊  235  ┊
      └╌╌╌╌╌╌╌┘
          │
          ▼
      ┌───────┐
      │  236  │
      └───────┘
```

**Fig. 14**

```
      ┌───────┐
      │  271  │
      └───────┘
          │
          ▼
      ┌───────┐
      │  272  │
      └───────┘
          │
          ▼
      ┌───────┐
      │  273  │
      └───────┘
          │
          ▼
      ┌───────┐
      │  274  │
      └───────┘
```

**Fig. 15**

Fig. 16

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1319173 B1
- CN 110169685 A
- EP 0251175 A2
- US 4655305 A
- US 10121121 B1